# EUROPEAN PATENT SPECIFICATION

(11) **EP 0 536 844 B1**
(45) Date of publication and mention of the grant of the patent: **14.01.1998**
(21) Application number: 92203061.4
(22) Date of filing: 06.10.1992
(51) Int. Cl.: F16L 19/08, F16L 47/04

(54) **Connector for the fluid-tight locking of plain pipes to threaded coupling elements**
Verbindung zum dichten Anschluss von glatten Rohren an Schraubverbindungsteile
Raccord pour la connection étanche de tuyaux lisses avec des éléments de raccordement filetés

(30) Priority: 08.10.1991 IT MI910873 U; 05.10.1992 IT MI920874 U
(43) Date of publication of application: 14.04.1993
(73) Proprietor: Bosco, Renza, Boffalora s/Ticino (Milano) (IT)
(72) Inventor: Bosco, Renza, Boffalora s/Ticino (Milano) (IT)
(74) Representative: Raimondi, Alfredo, Dott. Ing. Prof.

(56) References cited:
- AU-B- 1 667 176
- BE-A- 662 088
- FR-A- 1 382 489
- FR-A- 2 625 790

## Description

The present invention relates to a connector for the axial and fluid-tight joining of plain pipes to the threaded end of coupling elements present on pipes of hydraulic, pneumatic and similar equipment.

As is known, there are many types of connector with threaded rings, used for the axial and fluid-tight joining of plain pipes to threaded pipes emerging from hydraulic or pneumatic equipment, with the purpose of ensuring, in addition to liquid-tightness or air-tightness, a mechanical engagement sufficient to prevent the disengagement of the plain pipe from the coupling element.

One type of connector of particularly simple construction basically consists of a threaded nut or ring, including rings or shaped sections of sleeve made of elastically yielding material, which may be fitted on the exterior of the plain pipe to be connected and may then be screwed on to the thread of the pipe emerging from the equipment.

The tightening of the nut compresses the rings on to the plain pipe to be connected, in a radial direction with respect to the said pipe, thus ensuring liquid-tightness and mechanical locking.

These connectors, which generally have rings with an inner surface toothed in a given direction or circular grooves of various sections, have various practical disadvantages resulting in the necessity of inserting the rings in the correct way in order to obtain the pressure of their teeth in the specified direction to prevent the disengagement of the connected pipe, the ease with which damage may be caused to the sealing rings during the fitting of the connector, including, for example, the torsional action on the said rings, losses of time for the preparation of the connector, and, above all, the impossibility of re-using the elastic rings after the detachment of the connector.

In order to avoid these disadvantages, various types of connectors, including re-usable ones, have been proposed, and consist of an assembly of a number of separable components capable of ensuring liquid- and air-tightness together with satisfactory mechanical engagement for axially connected pipes.

Since the said connectors of the detachable and re-usable type consist of a number of separate components to be interconnected within a threaded ring, they require rather complicated fitting and detachment operations.

In fact, the said re-usable connectors normally consist of a ring threaded over only part of its length, while a rubber or similar sleeve, axially reinforced if necessary and shaped with an inclined surface at its upper edge, is interposed in certain cases between the said thread and a removable collar located at its opposite end, the said sleeve being compressed between the said collar and the end of the plain pipe to be connected during the tightening of the ring, in such a way as to force the said sleeve to expand radially and thus ensure both liquid-tightness and mechanical locking.

In other cases, the said removable collar has its upper part chamfered to form an inclined plane engaging with a small tube or mandrel located coaxially with respect to the plain pipe to be connected and provided internally with circular grooves and axial incisions which make it deformable, so that when the ring is screwed on, the collar associated with it compresses the rubber sleeve and causes it to expand radially as a result of the displacement of the said mandrel. This displacement causes the plain pipe to be stably locked to the connector by the action of the mutually engaged inclined planes of the collar of the ring and of the said radially deformable mandrel.

However, in addition to their complexity of construction, the said known detachable and re-usable connectors have various practical disadvantages, for example the necessity of removing the collar from the end of the ring to enable the rubber sealing sleeve to be extracted and then reinserted as and when necessary; the necessity of having, at the end of the deformable mandrel, a retaining collar designed to remain outside the ring during the tightening of the said ring; the difficulty in keeping the rubber sealing sleeve in a position perfectly coaxial with the ring during insertion on the pipe to be connected, owing to the presence of a large clearance between the sleeve and the internal surface of the said ring. The above-mentioned prior art is, for example, disclosed in FR-1 382 489.

The matters discussed above in relation to the more reliable types of connectors currently in use demonstrate the need to produce a connector, for the axial connection of pipes to coupling elements present on other pipes or on hydraulic or pneumatic equipment, which is capable of drastically reducing the disadvantages and limitations inherent in the detachable and re-usable connectors known at present, and which, in particular, enables a high mechanical locking force to be obtained together with an effective fluid-tightness even under high pressure, while using a smaller number of components, or in any case, smaller than that required in known connectors.

There is also a requirement that the said connectors should be pre-assembled into a single unit in order to free the end user, who may not be an expert, from the necessity of dismantling and re-assembly operations at the time of fitting the connector, thus also reducing the possibility of errors in the assembly of the various component parts of the connector.

The said results and the said advantages are obtained with a connector for the fluid-tight locking of plain pipes to threaded coupling elements, according to claim 1.

Further advantages of the connector forming the subject of the invention may be understood from the following detailed description of one of its practical embodiments, provided with reference to the attached sheet of drawings, supplied for information only, in which:
- Figure 1: shows a partial external view and a partial axial diametric section of a connector made according to the invention, illustrated in the locked position;
- Figure 2: is a perspective view of a detail of the sealing sleeve body;
- Figure 3: shows the radially compressable or deformable mandrel;

With reference to the said figures, the connector in question consists of a substantially cylindrical ring 1, and with the usual external flats 1a for engagement with a spanner, inside which there is formed a thread 2 over only a section of the length of the said ring; the thread 2 is designed to be screwed on to the thread 3 of a coupling pipe 4 of hydraulic or pneumatic equipment or of a pressurised fluid supply pipe.

At the end of the ring 1 opposite the threaded end there is a reduction in diameter, forming a collar 5 with an inwardly frustoconical edge.

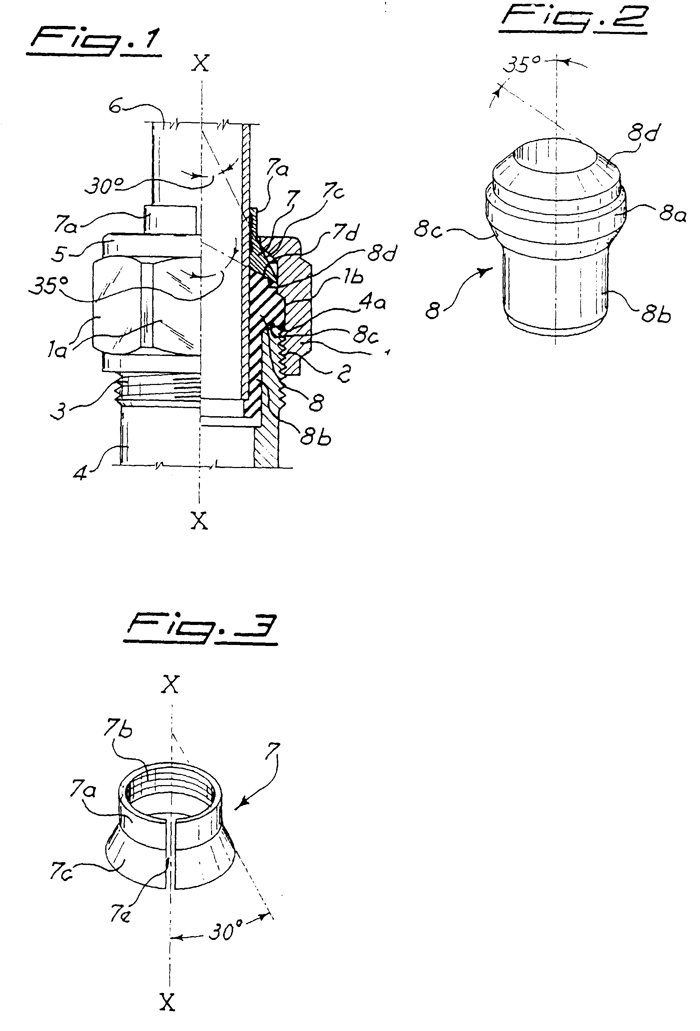

The plain pipe 6 to be connected to the threaded coupling element 4 by the ring 1 is introduced through the collar 5, and a mandrel 7 is inserted coaxially between the pipe 6 and the internal conical surface of the collar 5. The said mandrel consists of a tubular section 7a, provided internally with annular grooves 7b (Fig. 3) and with a longitudinal incision 7e, and has a bell-shaped extension with a frustoconical external surface 7c with a flare angle with respect to the longitudinal axis X-X of the ring which is fairly small and preferably approximately 30°-35° (Figs 1 and 3). Additionally, the base of the frustoconical bell shape 7c is formed over an annular section of its own base with an internally conical surface 7d with a flare angle of approximately 35° with respect to the axis of the ring (Figures 1 and 2). Between the conical base 7d of the mandrel 7 and the end 4a of the coupling element 4 there is inserted a sealing sleeve body 8 (Fig. 2) made of elastomeric material such as rubber or the like, shaped in such a way as to have an annular enlargement 8a at a point near one of its ends, a cylindrical section 8b designed to remain inserted coaxially between pipe 6 and pipe 4 (Fig. 1), and two frustoconical surfaces 8c and 8d for connection between the annular enlargement 8a and the tubular body 8b. The conical surface 8d is designed to bear against the conical surface 7d of the base of the mandrel 7, while the opposite surface 8c bears against the conical end 4a of the threaded element 4.

The particular shape of the sealing sleeve body 8 enables this sleeve to remain stably fixed to the ring and in a position coaxial with it even when the connector is not in the locked position, thus facilitating the fitting of the assembly forming the connector on to the plain pipe 6 to be connected.

Consequently, by fitting the complete connector, formed by the ring, the radially deformable mandrel and the sealing sleeve body, on to the pipe 6 until the inclined surface 8c of the enlargement 8a bears against the edge 4a, also inclined, of the coupling element 4, the pipes 6 and 4 are locked together by screwing the ring 1 completely on to the thread 3 of the pipe 4.

During the tightening of the ring, the conical surface 7c of the mandrel 7, with a small flare angle, makes it possible to obtain, even with a limited amount of axial compression of the sleeve body 8, a high radial stress on the mandrel which, as a result of the incision 7e and the circular grooves 7b, adheres stably to the pipe 6; at the same time, the sealing body 8 undergoes a completely free deformation between the ring, the mandrel and the end of the pipe 4 which ensures fluid-tightness and mechanical locking.

In fact, in the tightening position, the collar 5 of the ring displaces the mandrel which compresses the sealing body 8 which is held by its enlargement 8a in a cavity 1b (Fig. 1) of the ring; at the same time, the sealing body 8, which is compressed and held in the cavity 1b of the ring, pushes the mandrel axially so that the cylindrical part 7a of the said mandrel is brought and kept outside the collar edge 5 of the said ring.

Conversely, when the connector is disengaged, the action of unscrewing the ring 1 causes it to undergo an axial displacement and to take with it the sealing body 8 which is fixed to it by the connection 8a-1b, and the sealing body in turn pushes outwards the mandrel 7 which is progressively released from the compression of the ring which rises up the inclined plane 7c. This pushing action is facilitated by the small inclination of the corresponding contact planes 7c-8d.

## Claims

1. Connector for the fluid-tight locking of a plain pipe (6) to a threaded coupling element (4) with tne possibility of axial adjustment, comprising a substantially cylindrical ring (1) provided at one end with a thread (2) which can engage with said threaded coupling element (4), a sealing body (8) in the form of a sleeve made of elastically yielding material, disposed coaxially inside said ring, and a tubular mandrel (7) which is radially deformable and slidable on said plain pipe (6), the end of said ring (1) opposite to its threaded end having a reduction in diameter forming a collar (5) internally snaped to give a conical surface, which collar is disposed in axial engagement with a corresponding conical surface (7c) of said deformable mandrel (7), said mandrel being disposed to bear on said sealing sleeve (8), said sealing sleeve (8) having an external radial enlargement (8a) which is stably housed within a corresponding annular cavity (1b) formed internally in said ring characterized in that
said sealing sleeve (8) has, on opposite sides of said radial enlargement (8a), two opposite junctions formed with conical surfaces (8d, 8c), with different flare angles, namely an angle of approximately 30° for the conical surface (8d) designed to remain in engagement with a similar conicity (7d) formed in the base of the mandrel, and an angle of approximately 45° for the conical surface (8c) designed to be engaged with the top edge (4a) of the threaded coupling element (4) in engagement with the ring (1).

2. Connector according to claim 1 characterized in that said sealing sleeve (8) has a tubular section (8b).

3. Connector according to Claim 1 characterised in that the said conical surface (7c) present on the mandrel (7) is formed on a frustoconical enlargement formed at one end of a section of a tubular body (7a) constituting the part of the mandrel which is guided and slidable on the pipe (6) to be connected, the flare angle or angle of conicity of the surface (7c) of the said frustoconical enlargement being made to be approximately 35°, corresponding to that provided on the conical surface of the said collar (5).

## Patentansprüche

1. Verbinder für die fluid-dichte Absperrung einem glatten Rohr (6) zu einem mit einem Gewinde versehenen Koppelelement (4), das die Möglichkeit einer axialen Befestigung bietet, enthaltend einen im wesentlichen zylindrischen Ring (1), der an einem Ende mit einem Gewinde (2) versehen ist, das in das besagte und mit einem Gewinde versehene Koppelelement (4) eingreifen kann, einem Abdichtkörper (8) in Form einer Buchse, der aus einem elastisch-nachgebenden Material besteht und der koaxial innerhalb dieses Rings angeordnet ist, einen röhrenförmigen Dorn (7), der radial deformierbar und gleitfähig auf dem glatten Rohr (6) ist, wobei das jeweilige Ende des Rings (1), das seinem mit einem Gewinde versehenen Ende gegenüberliegt, eine Durchmesserreduzierung aufweist und einen Kragen (5) bildet, der innen so ausgeformt ist, daß er eine konische Oberfläche bildet, wobei dieser Kragen in axialer Verbindung mit einer entsprechenden konischen Oberfläche (7c) des deformierbaren Dorns (7) steht, der so angeordnet ist, daß er auf der Abdichtmuffe (8) aufliegt, wobei die Abdichtmuffe (8) eine externe radiale Erweiterung (8a) aufweist, die fest in einer entsprechenden ringförmigen Ausnehmung (1b) untergebracht ist, die sich in dem Ring befindet, **dadurch gekennzeichnet,** daß die Abdichtmuffe (8) an einander gegenüberliegenden Seiten der radialen Erweiterung (8a) zwei einander gegenüberliegende Verbindungen aufweist, die konische Oberflächen (8d, 8c) und verschiedene Öffnungswinkel aufweisen, nämlich einen Winkel von ungefähr 30° für die konische Oberfläche (8d), die so ausgebildet ist, daß sie mit einer ähnlichen Konizität (7d) in der Basis des Dorns im Eingriff bleibt, sowie einen Winkel von ungefähr 45° für die konische Oberfläche (8c), die so ausgelegt ist, daß sie mit dem oberen Ende (4a) des mit einem Gewinde versehenen Koppelelements (4) in Verbindung gebracht werden kann, das mit dem Ring (1) gekoppelt ist.

2. Verbinder nach Anspruch 1, **dadurch gekennzeichnet,** daß die Abdichtmuffe (8) einen rohrförmigen Abschnitt (8b) aufweist.

3. Verbinder nach Anspruch 1, **dadurch gekennzeichnet,** daß die konische Oberfläche (7c) auf dem Dorn (7) an einer frustrokonischen Erweiterung vorgesehen ist, die sich an einem Ende eines Abschnitts eines rohrförmigen Körpers (7a) befindet und denjenigen Teil des Dorns bildet, der geführt und auf dem zu verbindenden Rohr (6) gleitend ist, wobei der Öffnungswinkel oder der Winkel der Konizität der Oberfläche (7c) der frustrokonischen Erweiterung auf ungefähr 35° festgelegt wird, was demjenigen Winkel entspricht, der an der konischen Oberfläche des Kragens (5) vorgesehen ist.

## Revendications

1. Raccord pour la connexion étanche d'un tuyau lisse (6) à un élément d'accouplement (4) fileté, avec possibilité de réglage axial, comprenant une bague (1) substantiellement cylindrique pourvue à une extrémité d'un filetage (2) pouvant s'engager avec ledit élément d'accouplement (4) fileté, un corps d'étanchéité (8) sous la forme d'un manchon constitué d'une matière se déformant élastiquement, disposé coaxialement à l'intérieur de ladite bague, et un mandrin tubulaire (7) radialement déformable et pouvant coulisser sur ledit tuyau lisse (6), l'extrémité de ladite bague (1) opposée à son extrémité filetée présentant une réduction de diamètre formant un collet (5) usiné intérieurement de façon à offrir une surface conique, lequel collet étant disposé en engagement axial avec une surface conique (7c) correspondante dudit mandrin déformable (7), ledit mandrin étant disposé pour s'appuyer sur ledit manchon d'étanchéité (8), ledit manchon d'étanchéité (8) présentant un élargissement radial externe (8a) logé de manière stable à l'intérieur d'une cavité annulaire (1b) correspondante formée intérieurement dans ladite bague, caractérisé en ce que
ledit manchon d'étanchéité (8) présente, sur des côtés opposés dudit élargissement radial (8a), deux jonctions opposées formées avec des surfaces coniques (8d, 8c), avec des angles d'évasement différents, à savoir un angle d'approximativement 30° pour la surface conique (8d) conçu pour rester en engagement avec une conicité (7d) similaire formée dans la base du mandrin, et un angle d'approximativement 45° pour la surface conique (8c) conçu pour s'engager avec le bord supérieur (4a) de l'élément d'accouplement (4) fileté en engagement avec la bague (1).

2. Raccord selon la revendication 1, caractérisé en ce que ledit manchon d'étanchéité (8) présente une section tubulaire (8b).

3. Raccord selon la revendication 1, caractérisé en ce que ladite surface conique (7c) présente sur le mandrin (7) est formée sur un élargissement tronconique formé à une extrémité d'une section d'un corps tubulaire (7a) constituant la partie du mandrin qui est guidée et peut coulisser sur le tuyau (6) à raccorder, l'angle d'évasement ou angle de conicité de la surface (7c) dudit élargissement tronconique étant réalisé de façon à valoir approximativement 35°, correspondant à celui prévu sur la surface conique dudit collet (5).
